Europäisches Patentamt

(19) European Patent Office

Office européen des brevets

(11) Publication number: **0 064 273**

**A2**

(12) **EUROPEAN PATENT APPLICATION**

(21) Application number: **82103626.6**

(22) Date of filing: **28.04.82**

(51) Int. Cl.³: **G 11 B 7/00**
**G 11 B 7/08, G 11 B 1/00**

(30) Priority: **01.05.81 JP 66456/81**

(43) Date of publication of application:
**10.11.82 Bulletin 82/45**

(84) Designated Contracting States:
**DE FR GB NL**

(71) Applicant: **TOKYO SHIBAURA DENKI KABUSHIKI
KAISHA
72, Horikawa-cho Saiwai-ku
Kawasaki-shi Kanagawa-ken 210(JP)**

(72) Inventor: **Tago, Yoshiaki
1-17-12-1103, Namiki Kanazawa-ku
Yokohama-shi(JP)**

(74) Representative: **PATENTANWÄLTE HENKEL - KERN -
FEILER - HÄNZEL
Möhlstrasse 37
D-8000 München 80(DE)**

(54) **Apparatus for processing information optically recorded on a disk.**

㊹ An apparatus for processing information optically recorded on a disk (4), which comprises a housing (1) having a recess (2) for accommodating the disk (4) in a rotatable state, a lid member (1b) for closing the recess (2), and an optical head (11) provided inside the housing (1) for movement along a radial direction of the disk (4) and serving at least to read out information from the disk (4) by the agency of a laser beam (13). The optical head (11) projects the laser beam (13) toward the disk (4) for illumination thereof in a direction from the interior of the housing (1) toward the lid member (1b). The lid member (1b) includes a laser beam blocking portion (16) disposed to face the path of movement of the optical head (11) for blocking the laser beam (13) and a through hole (15) covered with a transparent plate (17) disposed to face a portion of the disk (4) other than a portion facing the path of movement for permitting the disk (4) to be seen from the outside.

F I G. 2

- 1 -

Apparatus for processing information
optically recorded on a disk

This invention relates to optical information processing systems which can at least read out information from a disk on which the information is recorded by irradiating the disk with a laser beam and, more particularly, to an optical information processing system in which a laser beam is directed toward the operator.

Recent optical information processing systems including an optical disk memory have various merits such as a recording density several ten to hundred times greater than that of a magnetic memory; capability of making high speed random access to; excellent long-period stock property; a ready recording system; capability of additional recording and inexpensive cost per bit. Thus, this kind of optical information processing system finds extensive applications as recording/reproducing system or as exclusive reproducing system. The exclusive reproducing type optical information processing system finds applications in home video disks, business video disks, audio PCM disks, etc. The recording/reproducing type optical information processing system finds applications in document files, video files, general computer memories, etc.

In this type of optical information processing system, a laser beam is usually directed upwardly to illuminate the lower side of a disk, on which information is recorded and which is horizontally disposed, in order to cope with the attachment of dust to the disk, simplify the construction and facilitate the mounting of the disk. Since the laser beam is upwardly directed for illumination, it is necessary to protect the eyes of the operator against the laser beam which might be projected by mistake in case when the disk is not mounted. Hitherto, it has been in practive to construct the casing with a material which will not transmit any laser beam.

In such a case, however, it has been impossible to confirm the presence or absence of disk and also whether or not the disk is rotating unless a lid which constitutes part of the casing and is operable to open and close a disk insertion opening is opened. In this respect, the prior art optical information processing system has been very inconvenient and also hazardous.

This invention has been intended in the light of the above mentioned circumstances, and its object is to provide a safe apparatus for processing information optically recorded on a disk, with which the presence or absence of the disk and also the rotating state thereof can be confirmed without need of opening a lid and also a laser beam will never be transmitted to the outside of a casing.

According to an aspect of the present invention, there is provided an apparatus for processing information optically recorded on a disk, which comprises a housing with a recess in which the disk is accommodated in a rotatable state, a lid member for closing the recess, and an optical head provided inside the housing for movement along a predetermined path and serving at least to read out information from the disk by the agency of a laser beam, the optical head projecting a laser beam toward the disk for illumination thereof in a direction from the interior of the housing toward the lid member, the lid member including laser beam blocking means disposed to face the path of movement of the optical head and blocking the laser beam and transmitting means disposed to face a portion of the disk other than a portion facing the path of movement and permitting the disk to be seen from the outside.

This invention can be more fully understood from the following detailed description when taken in conjunction with the accompanying drawings, in which:

Fig. 1 is a perspective view showing a first embodiment of the apparatus for processing information optically recorded on a disk according to the invention;

Fig. 2 is a sectional view schematically showing the apparatus shown in Fig. 1;

Fig. 3 is a perspective view showing a second embodiment of the apparatus according to the invention;

Fig. 4 is a perspective view showing a third embodiment of the apparatus according to the invention; and

Fig. 5 is a perspective view showing a fourth embodiment of the apparatus according to the invention.

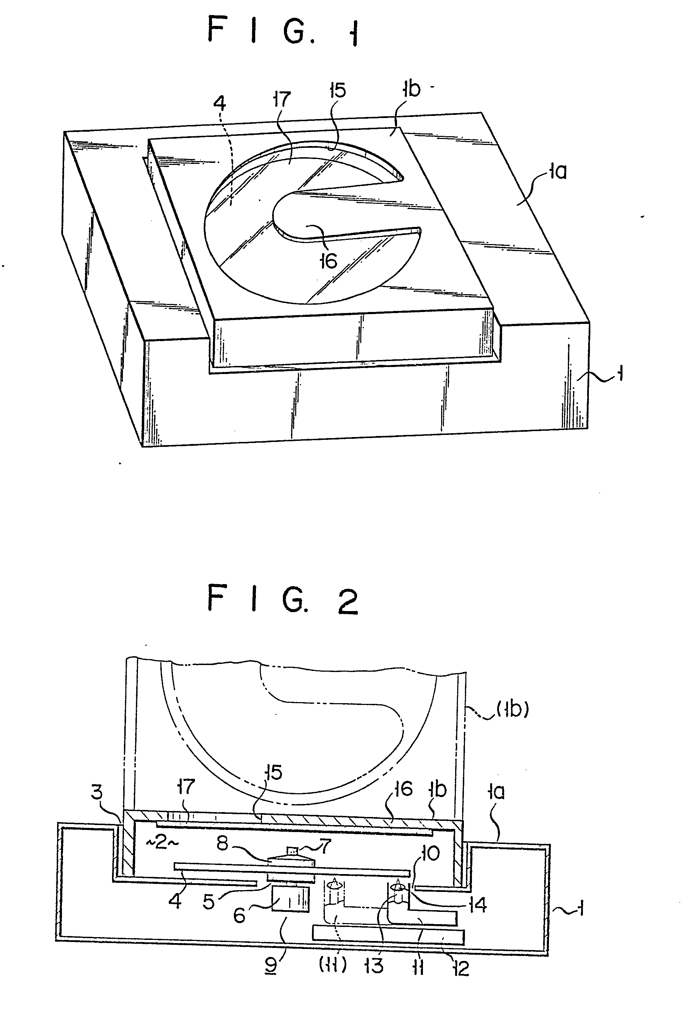

Now, a first embodiment of the optical information processing apparatus according to the invention will be described in detail with reference to Figs. 1 and 2.

Referring to Figs. 1 and 2, reference numeral 1 designates a housing of the optical information processing apparatus. The housing 1 comprises a body la having a disk accommodation recess 2 formed at the top and a lid member 1b capable of being openably close the recess 2. The lid member 1b is hinged at its rear edge by means of a hinge mechanism (not shown) to the body la. The lid member 1b is thus rotatable between an open position, at which a disk insertion opening 3 defined by the upper edge of the disk accommodation recess 2 is opened, and a close position, at which the disk insertion opening 3 is closed.

At the center of the disk accommodation recess 2, there is disposed a turntable 5 for rotating a disk 4 carrying information recorded thereon in a horizontal state. The turntable 5 is mounted on an intermediate portion of a shaft 7 which is driven by a motor 6 mounted in the body 1a. The disk 4 is secured onto the turntable 5 with its central portion clamped between the turntable 5 and a clamping member 8 screwed to the upper end of the·shaft 7. The disk 4 comprises a disk-like transparent base member having a central hole through which the shaft 7 penetrates and an information forming layer consisting of a recording layer or a light reflection layer formed by means for, e.g. depositing on one side of the transparent base member. The turntable 5, shaft 7 and clamping member 8 constitute a disk drive unit 9. The disk 4 is mounted in the disk drive unit 9 with its one side formed with the information forming layer directed downwards.

Inside the body 1a, a laser type optical head 11 is disposed such that its upper end projects into the disk accommodation recess 2 through a slit 10 formed on the bottom plate defining the recess 2. The optical head 11 is reciprocably driven in the radial direction of the disk 4 by a head drive mechanism 12. More particularly, the optical head 11 can be driven to successive positions to face respective information recording tracks formed at a very small pitch on the disk 4. In the optical head 11 the laser beam 13 is condensed through a condenser lens 14, and the condensed laser beam 13 is projected upwards to illuminate the information forming layer formed on the lower side of the disk 4. The optical head 11 records information on the disk 4 by forming pits (or holes) in the information forming layer and thereby producing corresponding status changes thereof according to the information. The optical head 11 also reads out information from the disk 4 by receiving reflected light of laser beam from the information forming layer and photoelectrically converting the received light containing the information. The electric signal containing the information read out is output through a control circuit (not shown) accommodated in the casing body 1a to reproduce the information.

On that portion of the lid member 1b which is opposite the disk 4, is formed a substantially horseshoe-like disk confirmation window 15, leaving that portion of the lid member 1b which is facing the path of movement of the optical head 11. That portion of the lid member 1b which is facing the path of movement of the optical head 11 constitutes a laser beam blocking portion 16 as a first member serving to block the laser beam 13. The disk confirmation window 15 is closed by a transparent or slightly colored dust-proof plate 17 which is a second member serving to prevent intrusion of dust into the recess 2 while permitting the inside to be seen.

As has been described in the foregoing, with the first embodiment of the invention described above, in which the lid member 1b constituting part of the housing 1 is formed with a disk confirmation window 15, it is possible to confirm the presence or absence of the disk 4 and also the state of rotation thereof without need of opening the lid member 1b. Besides, since the portion 16 of the lid member 1b other than the disk confirmation window 15 and facing the path of movement of the optical head 11, there is no possibility for the laser beam 13 to leak to the outside, and the eyes of the operator can be reliably protected.

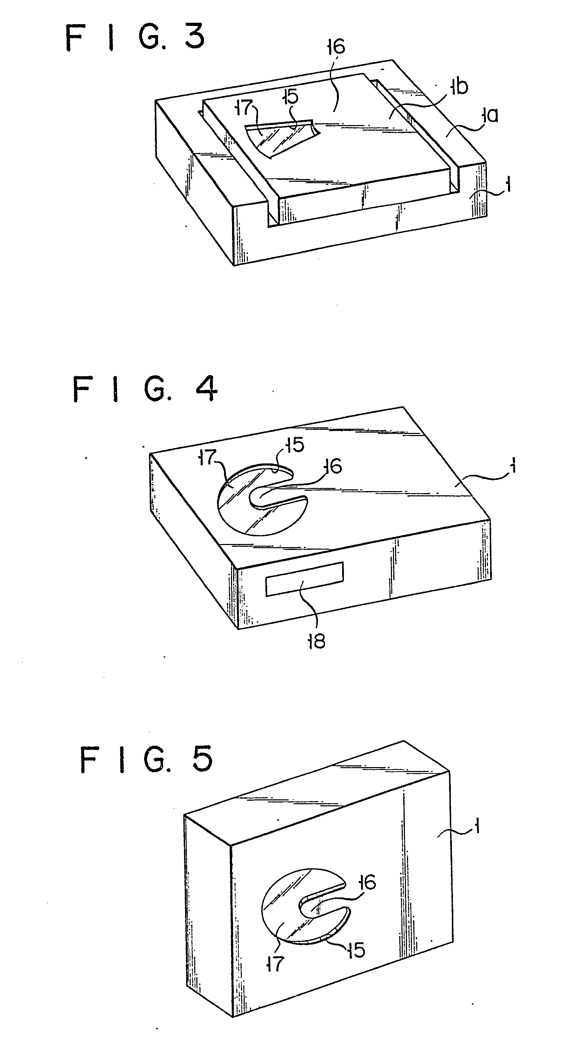

The construction of the first embodiment described above is by no means limitative, and various changes and modifications are possible without departing from the scope of the invention. Now, other embodiments of the invention will be described with reference to Figs. 3 to 5. In these Figures, like parts to those in the first embodiment are designated by like reference numerals, and their detailed description is omitted.

While in the first embodiment described above the disk confirmation window 15 is formed to have a horseshoe-like shape, this is by no means limitative. For example, a substantially rectangular disk confirmation window may be formed as in a second embodiment of Fig. 3.

Further, while in the first embodiment the housing 1 comprises the casing body 1a with the disk accommodation recess 2 formed at the top and the lid member 1b capable of being openably close the disk accommodation recess 2 of the casing body 1a, this is by no means limitative, and a lid may be secured to the body 1a as in a third embodiment of Fig. 4. In this embodiment, the casing 1 comprises a disk insertion opening 18 formed on one lateral side thereof. The disk 4 is inserted into and removed from the casing 1 through the disk insertion opening 18 by using a separate casing (not shown).

Further, while in the first embodiment the disk 4 is held horizontally for use, this is by no means limitative, and it is of course possible to hold the disk 4 in a vertical state as in a fourth embodiment of Fig. 4.

Claims:

1. In an apparatus for processing information optically recorded on a disk (4), which comprises:

a housing (1) having a recess (2) for accommodating the disk (4) in a rotatable state;

a lid member (1b) for closing said recess (2); and an optical head (11) provided inside said housing (1) for movement along a predetermined path and serving at least to read out information from the disk (4) by the agency of a laser beam (13), said optical head (11) projecting the laser beam (13) toward the disk (4) for illumination thereof in a direction from the interior of the housing (1) toward the lid member (1b),

the improvement in which said lid member (1b) includes:

laser beam blocking means (16) disposed to face said path of movement of the optical head (11) for blocking the laser beam (13); and

transmitting means (15) disposed to face a portion of the disk other than a portion facing said path of movement for permitting the disk (4) to be seen from the outside.

2. The apparatus according to claim 1, wherein said optical head records information on the disk by the agency of the laser beam.

3. The apparatus according to claim 1, wherein said optical head is movable along a path extending in the radial direction of the disk.

4. The apparatus according to claim 1, wherein said laser beam blocking means includes a first member consisting of a material capable of blocking the laser beam.

5. The apparatus according to claim 4, wherein said transmitting means includes a through hole formed in the lid member.

6. The apparatus according to claim 5, wherein said through hole is defined by that portion of the lid member which is opposing to the disk without said first member.

7. The apparatus according to claim 6, wherein said transmitting means includes a second member closing said through hole and consisting of a transparent material.

8. The apparatus according to claim 1, wherein said disk is held in a horizontal state.

9. The apparatus according to claim 1, wherein said disk is held in a vertical state.

10. The apparatus according to claim 1, wherein said lid member is rotatably provided inside the housing.

11.. The apparatus according to claim 1, wherein said lid member is secured to the housing.

12. The apparatus according to claim 11, which further comprises:

a disk insertion opening formed one lateral side of the housing, the disk being inserted into said recess through said disk insertion opening.

# F I G. 1

# F I G. 2

F I G. 3

F I G. 4

F I G. 5